# Europäisches Patentamt

# European Patent Office

# Office européen des brevets

(19)

(11) Veröffentlichungsnummer: **0 082 478**

**A1**

(12) **EUROPÄISCHE PATENTANMELDUNG**

(21) Anmeldenummer: 82111654.8

(22) Anmeldetag: 15.12.82

(51) Int. Cl.³: **G 03 B 21/10**
G 09 F 19/18

(30) Priorität: 18.12.81 DE 3150135

(43) Veröffentlichungstag der Anmeldung:
29.06.83 Patentblatt 83/26

(84) Benannte Vertragsstaaten:
AT BE CH DE FR GB IT LI NL SE

(71) Anmelder: Homann, Jochen
Spindecksfeld 13
D-4030 Ratingen 6(DE)

(71) Anmelder: Thomasik, Horst
Blütenstrasse 1
D-4100 Duisburg 11(DE)

(72) Erfinder: Homann, Jochen
Spindecksfeld 13
D-4030 Ratingen(DE)

(72) Erfinder: Thomasik, Horst
Blütenstrasse 1
D-4100 Duisburg 11(DE)

(72) Erfinder: Krieg, Günther, Dr.
Im Rennich 12
D-7500 Karlsruhe 41(DE)

(72) Erfinder: Wüst, Jürgen, Dr.
Rheinstrasse 22
D-7514 Leopoldshafen(DE)

(74) Vertreter: Spalthoff, Adolf, Dipl.-Ing.
Pelmanstrasse 31 P.O. Box 34 02 20
D-4300 Essen 1(DE)

(54) Vorrichtung für Werbe- und/oder Informationszwecke.

(57) Um einen möglichst großen etwaigen Interessentenkreis mit einer Werbung oder einer Information unter Verwendung von Dia-Projektoren anzusprechen, wird erfindungsgemäß vorgeschlagen, daß ein oder mehrere Dia-Projektoren in einem öffentlichen Verkehrsmittel in dessen oberen Bereich angeordnet ist bzw. sind. Ein Dia-Projektor ist im Bereich des Fahrersitzes, -standes oder auch im Fahrgastraum angebracht. Der Dia-Projektor ist in einen Rahmen eingesetzt, der an der Wand und/oder an der Decke des Verkehrsmittels befestigbar ist. Der Rahmen ist federnd und ggf. mit einer Dämpfung versehen.

Fig. 1

Fig. 2

EP 0 082 478 A1

1. Jochen Homann
   Spindecksfeld 13

   4030 Ratingen 6

2. Horst Thomasik
   Blütenstraße 1

   4100 Duisburg 11

.

"Vorrichtung für Werbe- und/oder Informationszwecke"

Die Erfindung betrifft eine Vorrichtung für Werbe- und/oder Informationszwecke, welche einen Dia-Projektor mit Bildschirm aufweist, in den Magazine oder Kassetten einsetzbar sind, in denen sich eine Vielzahl von Diapositiven befindet, die an endlos umlaufenden Trägern befestigt sind oder mit Bildverkleinerung ein Endlosband darstellen.

Zur Darbietung von Werbe- und/oder Informationsaussagen ist es bekannt, Dia-Projektoren zu verwenden, die äußerlich Monitoren ähnlich sehen. Diese weisen einen Bildschirm auf, auf dem die einzelnen Diapositive nacheinander sichtbar gemacht werden.

Der Erfindung liegt die Aufgabe zugrunde, unter Verwendung derartiger Dia-Projektoren einen möglichst großen etwaigen Interessentenkreis anzusprechen.

Gemäß der Erfindung wird dies dadurch erreicht, daß ein oder mehrere Dia-Projektoren in einem öffentlichen Verkehrsmittel in dessen oberem Bereich angeordnet ist bzw. sind. Auf diese Weise ist es möglich, täglich Millionen Benutzern von öffentlichen Verkehrsmitteln Werbe- und/oder Informationsaussagen darzubieten, wobei ein hoher Grad von Einprägung erreicht wird, da die weitaus größte Zahl der Fahrgäste sich während der Fahrt nicht mit anderen Dingen beschäftigen, so daß deren Aufmerksamkeit zwangsläufig auf das Dargebotene gelenkt wird.

Vorteilhaft ist ein Dia-Projektor im Bereich des Fahrersitzes oder -standes angebracht, so daß die Bedienung durch den Fahrer unschwer möglich ist oder aber durch eine Fernbedienung überwacht werden kann. Die Anbringung ist so, daß der Dia-Projektor vom ganzen Fahrgastraum gut sichtbar ist.

Gemäß einem weiteren Merkmal der Erfindung ist der Dia-Projektor in einen Rahmen eingesetzt, der an der Wand und/oder dem Dach des Verkehrsmittels befestigt ist. Um von Fahrbahnunebenheiten herrührende Stöße auf das Gerät soweit wie möglich auszuschließen, ist der Rahmen federnd aufgehängt und mit einer Dämpfung versehen. Um den Dia-Projektor gegen unbefugte Entnahme zu sichern, weist der Rahmen eine Schließeinrichtung auf. Das gleiche gilt für die die Diapositive enthaltenen Magazine oder Kassetten, die ebenfalls über eine Schließeinrichtung im Gehäuse des Projektors verriegelbar sind.

Der Dia-Projektor ist mit einem Umformer ausgerüstet, so daß dieser vom Bordnetz aus betrieben werden kann.

Um eine möglichst hohe Lichtstärke zu erzielen, ist hinter der Lampe ein Reflektor vorgesehen. Aus demselben Grunde befindet sich zwischen der Lampe und dem Filmprojektionsfenster ein Kondensor. Durch diese Ausgestaltung wird nahezu die gesamte von der als Lampe verwendeten intensiven Lichtquelle erzeugte Strahlung für die Bilderzeugung ausgenutzt.

Zur Erreichung einer starken Vergrößerung, welche annähernd der eines Mikroskops entspricht, beispielsweise von Dia-Filmen im Kleinbildformat 18 x 24 mm$^2$ auf Bildgrößen von ca. 1 x 1 m$^2$, wird eine Optik benutzt, welche aus einem Objektiv und einer Fresnel-Linse besteht. Das Objektiv erzeugt zunächst ein vergrößertes Zwischenbild. Letzteres wird durch die Fresnel-Linse mit den gewünschten Abmessungen auf den Bildschirm bzw. eine Scheibe projiziert. Das Objektiv ist zur Vermeidung von Farbfehlern als Achromat ausgebildet.

Zur Kühlung der optischen Bestandteile sowie der mit dem Träger der Bilder in Kontakt kommenden Teile des Gerätes wird ein leistungsstarker Lüfter eingesetzt.

Gemäß einem weiteren Merkmal der Erfindung ist der endlose Träger mit einem Schrittmotor gekoppelt. Auf der Antriebswelle des Schrittmotors ist ein Zahnrad angeordnet, dessen Zähne in eine Perforation des Trägers eingreifen. Um eine einwandfreie Positionierung der Bilder am Filmprojektionsfenster sicherzustellen, wird mindestens ein Mal pro Umlauf des Trägers mit Hilfe einer Lichtschranke und einer im Film vorhandenen Kerbe eine Justierung durchgeführt und evtl. eine Korrektur vorgenommen. Sobald Licht durch die Kerbe des Trägers fällt, zeigt der am Detektor der Lichtschranke erzeugte Spannungsimpuls an, daß ein Bild exakt im Filmprojektionsfenster steht. Dieses Signal setzt die Steuerung des Schrittmotors auf Null, so daß sichergestellt ist, daß beim nächsten Umlauf jeweils ein volles Bild und nicht beispielsweise zwei Hälften benachbarter Bilder sich im Filmprojektionsfenster befinden. Ein Taktgeber steuert den Schrittmotor an, wobei die Zahl der Schritte pro Bild so groß gewählt ist, daß der Film um genau eine Bildabmessung weitertransportiert wird.

Ein Ausführungsbeispiel der Erfindung ist an Hand der Zeichnung näher erläutert, und zwar zeigt:


Figur  1  in schematischer Darstellung eine Ansicht des vorderen Bereichs eines öffentlichen Verkehrsmittels,

Figur  2  in schaubildlicher Darstellung eine Ansicht des Projektors,

Figur  3  in schematischer Darstellung eine geschnittene Seitenansicht des Projektor,

Figur  4  in schematischer Darstellung eine geschnittene Seitenansicht des Projektors einer zweiten Ausführungsform und

Figur  5  ein  Blockschaltbild der Steuerung des Antriebs.


Mit 1 ist der Aufbau eines öffentlichen Verkehrsmittels, beispielsweise eines Autobusses, bezeichnet. In dessen vorderem Bereich befindet sich der Fahrersitz 2. An der Decke 3 ist im Bereich des Fahrersitzes 2 ein Rahmen 4 befestigt, in den der Dia-Projektor 5 eingesetzt ist.

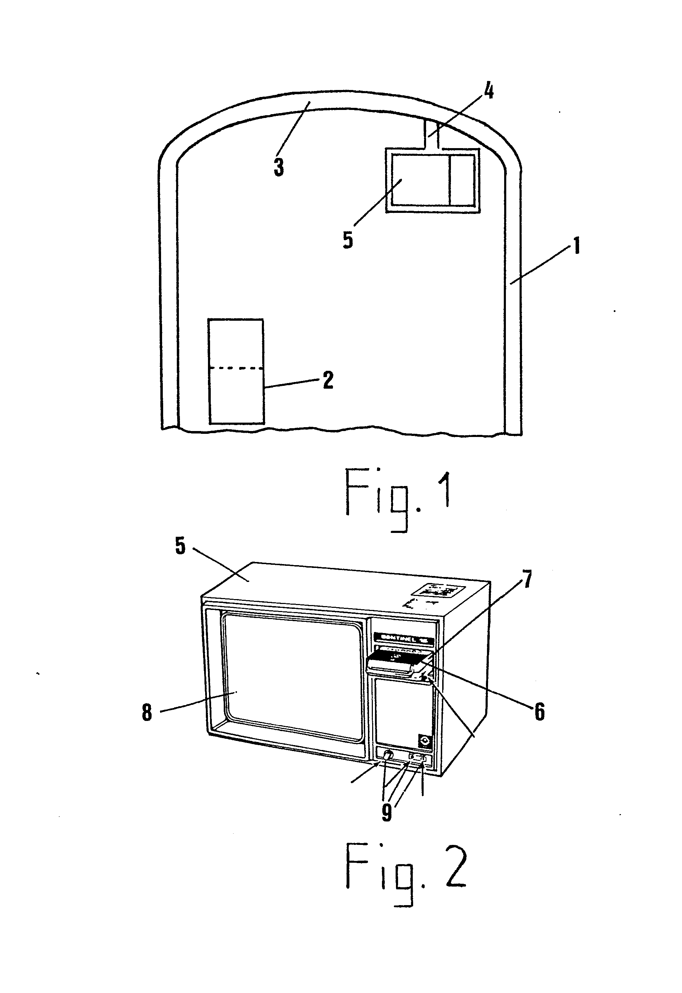

Wie aus Figur 2 ersichtlich, weist der Dia-Projektor 5 einen Aufbau auf, wie er bei Monitoren üblich ist. Die mit einer Vielzahl von Diapositiven versehenen Magazine oder Kassetten 6 werden in eine Aufnahmeöffnung 7 des Gehäuses des Projektors 5 eingeschoben und auf dessen Bildschirm 8 sichtbar gemacht.
Die Bedienungselemente 9 befinden sich an der Vorderseite,
so daß diese vom Fahrer des öffentlichen Verkehrsmittels
leicht erreichbar bzw. fernbedienbar sind. Sowohl am
Rahmen 4 als auch am Gehäuse des Dia-Projektors 5 sind
Schließeinrichtungen vorgesehen, um den Dia-Projektor 5
sowie die Magazine oder Kassetten 6 gegen unbefugte Entnahme
zu sichern.

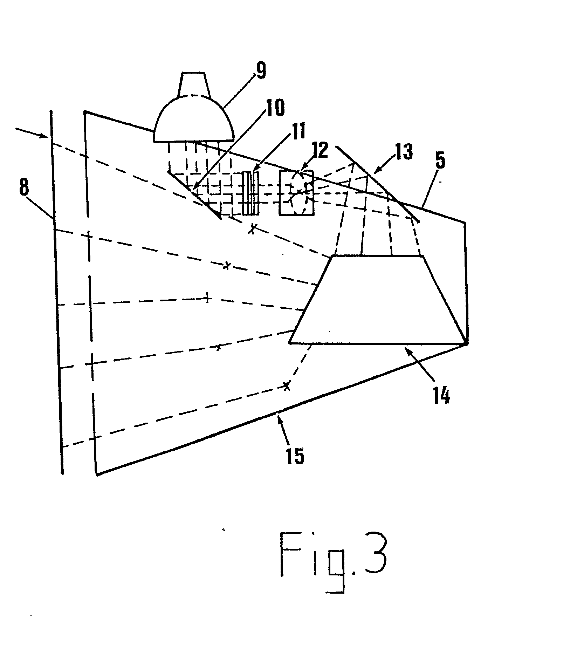

Aus Figur 3 ergibt sich der Aufbau des Dia-Projektors 5.
Dieser ist an seiner Vorderseite mit dem Bildschirm 8
versehen, auf welchem die Diapositive sichtbar gemacht
werden. Dies geschieht mit Hilfe einer Lampe 9, deren
Strahlung über einen Spiegel 10 umgelenkt werden auf ein
Filmprojektionsfenster 11, durch welches der mit den Diapositiven besetzte Träger eines Magazins 6 hindurchgeführt
ist. Die aus dem Filmprojektionsfenster 11 austretende
Strahlung wird über die Linse 12 über die Spiegel 13, 14, 15
umgelenkt und auf dem Bildschirm 8 sichtbar gemacht.

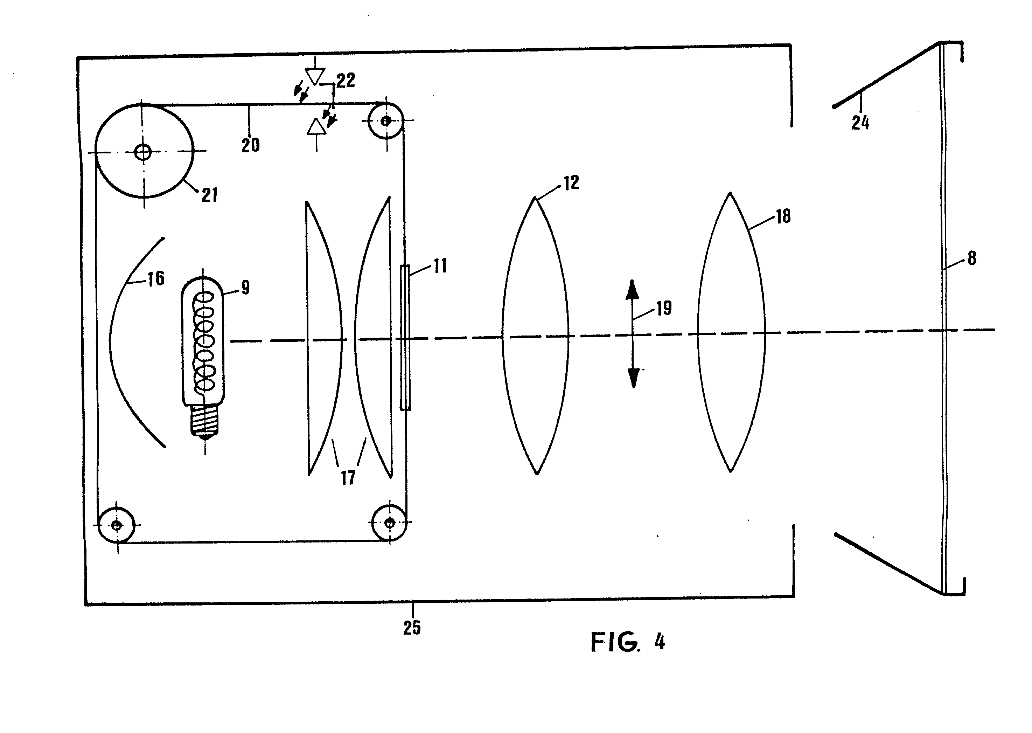

Wie aus Figur 4 ersichtlich, ist hinter der Lampe 9 ein
Reflektor 16 vorgesehen und außerdem befindet sich zwischen
der als Lampe 9 verwendeten sehr intensiven Lichtquelle
und dem Filmprejektionsfenster 11 ein Kondensor 17, so daß
nahezu die gesamte von der Lampe 9 erzeugte Strahlung für
die Bilderzeugung ausgenutzt wird.

Die verwendete Optik besteht aus einem Objektiv 12 und einer Fresnel-Linse 18, die sich zwischen dem Filmprojektionsfenster 11 und dem Bildschirm 8 bzw. Scheibe befinden. Das Objektiv 12 ist als Achromat ausgebildet. Durch diese Ausgestaltung wird eine sehr starke Vergrößerung erreicht, welche annähernd der eines Mikroskops entspricht. Das Objektiv 12 erzeugt zunächst ein vergrößertes Zwischenbild 19. Letzters wird durch die Fresnel-Linse 18 mit den gewünschten Abmessungen auf die Scheibe 8 projiziert.

Der endlose Träger 20 für die nicht weiter dargestellten Bilder, ist mit einem Schrittmotor 21 gekuppelt. Auf der Antriebswelle des Schrittmotors 21 ist ein Zahnrad angeordnet, welches in eine Perforation des Trägers 20 eingreift. Der Träger ist durch eine Lichtschranke 22 hindurchgeführt. Der Träger 20 weist mindestens eine Kerbe od.dgl. auf, so daß eine Justierung und damit genaue Einstellung der einzelnen Bilder des Trägers 20 durchgeführt werden kann. Fällt z.B. Licht durch die Kerbe des Trägers 20, so zeigt der am Detektor der Lichtschranke 22 erzeugte Spannungspult, daß ein Bild exakt im Beleuchtungsfeld des Filmprojektionsfensters 11 vorsteht. Dieses Signal setzt die Steuerung 23 des Schrittmotors 21 auf Null, so daß sichergestellt ist, daß beim nächsten Umlauf jeweils ein vollständiges Bild und nicht beispielsweise zwei Hälften benachbarter Bilder sich im Beleuchtungsfeld befinden. Ein
Taktgeber steuert den Schrittmotor 21 an, wobei die Zahl
der Schritte pro Bild so groß gewählt ist, daß der Träger
20 jeweils genau um eine Bildabmessung weitertransportiert
wird.

Als Projektionsscheibe 8 kann Maratta eingesetzt werden.
Aus Festigkeitsgründen sowie zur Reduzierung der Herstellungskosten ist es jedoch auch möglich, eine Scheibe 8
aus Kunststoff zu verwenden. Um den Einfluß von Fremdlicht
herabzusetzen, ist die Projektionsscheibe 8 mit einer
Blende 24 versehen, die möglichst weit sowohl an der Vorderals auch an der Rückseite über die Scheibe 8 hinausragt.

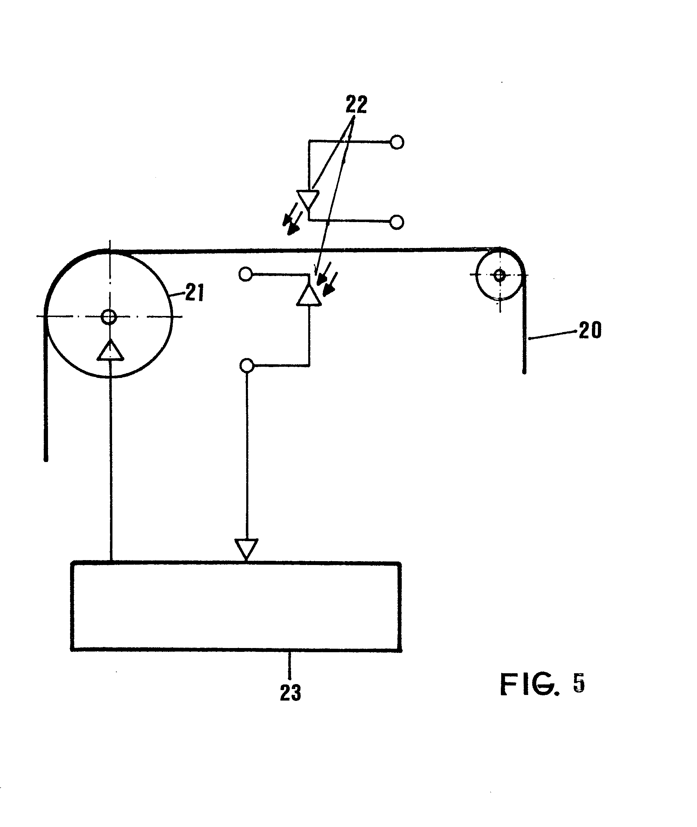

Das Blockschaltbild für den Schrittmotor 21 ist aus Figur 5
ersichtlich. Der Schrittmotor 21 bewirkt durch Impulse der
Steuerung 23 einen definierten Vorschub des Trägers 20,
welcher genau einer Bildlänge entspricht. Ein in die
Steuerung 23 für den Schrittmotor 21 eingebauter Zeitgeber
bestimmt die zeitliche Folge der Bilder.

Sämtliche vorerwähnten Bauteile befinden sich innerhalb des Gehäuses 25 und sind somit gegen äußere Einflüsse geschützt.

Durch die erfindungsgemäße Anbringung von Dia-Projektoren
in öffentlichen Verkehrsmitteln ist es möglich, eine Vielzahl von etwaigen Interessenten zwangsläufig anzusprechen,
da diese nicht die Möglichkeit haben, die Darbietung abzuschalten, sondern allenfalls die Aufmerksamkeit auf andere
Dinge zu lenken. Dieses ergibt einen hohen Grad von Einprägung des Dargebotenen bei einer verhältnismäßig großen Anzahl von etwaigen Interessenten.

PATENTANSPRÜCHE

1.) Vorrichtung für Werbe- und/oder Informationszwecke, welche einen Dia-Projektor mit Bildschirm aufweist, in den Magazine oder Kassetten einsetzbar sind, in denen sich eine Vielzahl von Diapositiven befindet, die an endlos umlaufenden Trägern befestigt sind oder mit Bildverkleinerung ein Endlosband darstellen, dadurch gekennzeichnet, daß ein oder mehrere Dia-Projektoren (5) in einem öffentlichen Verkehrsmittel (1) in dessen oberem Bereich angeordnet ist bzw. sind.

2.) Vorrichtung nach Anspruch 1, dadurch gekennzeichnet, daß ein Dia-Projektor (5) im Bereich des Fahrersitzes (2) -standes oder auch Fahrgastraumes angebracht ist.

3.) Vorrichtung nach Anspruch 1 oder 2, dadurch gekennzeichnet, daß der Dia-Projektor (5) in einen Rahmen (4) eingesetzt ist, der an der Wand und/oder an der Decke (3) des Verkehrsmittels (1) befestigt ist.

4.) Vorrichtung nach Anspruch 1 oder einem der vorhergehenden, dadurch gekennzeichnet, daß der Rahmen (4) federnd und ggf. mit einer Dämpfung versehen ist.

5.) Vorrichtung nach Anspruch 1 oder einem der vorhergehenden, <u>dadurch gekennzeichnet</u>, daß der Dia-Projektor (5) in dem Rahmen (4) mittels einer Schließeinrichtung gesichert ist.

6.) Vorrichtung nach Anspruch 1 oder einem der vorhergehenden, <u>dadurch gekennzeichnet</u>, daß das jeweils in den Dia-Projektor (5) eingesetzte Magazin oder Kassette (6) in diesem mittels einer Schließeinrichtung gesichert ist.

7.) Vorrichtung nach Anspruch 1 oder einem der vorhergehenden, <u>dadurch gekennzeichnet</u>, daß der Dia-Projektor (5) mit einem Umformer ausgerüstet ist.

8.) Vorrichtung nach Anspruch 1 oder einem der vorhergehenden, <u>dadurch gekennzeichnet</u>, daß hinter der Lampe (9) ein Reflektor (16) vorgesehen ist.

9.) Vorrichtung nach Anspruch 1 oder einem der vorhergehenden, <u>dadurch gekennzeichnet</u>, daß sich zwischen der Lampe (9) und dem Filmprojektionsfenster (11) ein Kondensor (17) befindet.

10.) Vorrichtung nach Anspruch 1 oder einem der vorhergehenden, <u>dadurch gekennzeichnet</u>, daß die Optik aus einem Objektiv (12) und einer Fresnel-Linse (18) besteht.

11.) Vorrichtung nach Anspruch 1 oder einem der vorhergehenden, dadurch gekennzeichnet, daß das Objektiv (12)
als Achromat ausgebildet ist.

12.) Vorrichtung nach Anspruch 1 oder einem der vorhergehenden, dadurch gekennzeichnet, daß das Gehäuse (25)
mit einem Lüfter ausgerüstet ist.

13.) Vorrichtung nach Anspruch 1 oder einem der vorhergehenden, dadurch gekennzeichnet, daß der endlose
Träger (20) mit einem Schrittmotor (21) gekuppelt ist.

14.) Vorrichtung nach Anspruch 1 oder einem der vorhergehenden, dadurch gekennzeichnet, daß auf der Antriebswelle des Schrittmotors (21) ein Zahnrad angeordnet ist,
dessen Zähne in eine Perforation des Trägers (20) eingreifen.

15.) Vorrichtung nach Anspruch 1 oder einem der vorhergehenden, dadurch gekennzeichnet, daß der Träger (20)
durch eine Lichtschranke (22) hindurchgeführt ist.

- 4 -

16.) Vorrichtung nach Anspruch 1 oder einem der vorhergehenden, dadurch gekennzeichnet, daß der Träger (20) mindestens eine Kerbe od.dgl. aufweist.

17.) Vorrichtung nach Anspruch 1 oder einem der vorhergehenden, dadurch gekennzeichnet, daß die Lichtschranke (22) mit einer Steuerung (23) für den Schrittmotor (21) in elektrisch leitender Verbindung steht.

18.) Vorrichtung nach Anspruch 1 oder einem der vorhergehenden, dadurch gekennzeichnet, daß der Schrittmotor (21) mittels eines Taktgebers gesteuert ist.

19.) Vorrichtung nach Anspruch 1 oder einem der vorhergehenden, dadurch gekennzeichnet, daß die Zahl der Schritte pro Bild derart gewählt ist, daß der Träger jeweils um eine Bildabmessung genau weitertransportiert wird.

Fig. 1

Fig. 2

Fig.3

FIG. 4

22

21

20

23

FIG. 5

Europäisches
Patentamt

EUROPÄISCHER RECHERCHENBERICHT

0082478
Nummer der Anmeldung

EP 82 11 1654

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| Y | US-A-3 801 199  (R.L. KAYE)<br>* Spalten 4-10; Figuren 1-10 * | 1 | G 03 B  21/10<br>G 09 F  19/18 |
| A | * Spalte 8, Zeilen 45-52; Figur 2 * | 8,9 | |
| | --- | | |
| Y | US-A-1 894 684  (W.D. HAWK)<br>* Seiten 2-6; Figuren 1-16 * | 1 | |
| A | * Seite 2, Zeilen 43-51; Figur. 1 * | 2,3 | |
| | --- | | |
| A | US-A-3 301 128  (R.H. BRANDT et al.)<br>* Spalten 3-5; Figuren 1,2 * | 1,8,9, 13 | RECHERCHIERTE SACHGEBIETE (Int Cl ³) |
| | --- | | |
| A | FR-A- 637 165  (N. BOROWSKY)<br><br>* Seiten 2-4; Figuren 1-5 * | 1-3,7-9 | G 03 B  21/10<br>G 03 B  21/11<br>G 09 F  19/18<br>G 03 B  27/62 |
| | --- | | G 03 B  27/46 |
| A | FR-A-2 151 328  (POLAROID CORP.)<br>* Seite 6, Zeilen 10-17; Figuren 2,3 * | 10 | G 03 B  23/12 |
| | --- | | |
| A | GB-A-1 014 642  (3M)<br>* Seite 2, Zeilen 65-68; Figur 6 * | 12 | |
| | ---       -/- | | |

Der vorliegende Recherchenbericht wurde für alle Patentansprüche erstellt

| Recherchenort<br>DEN HAAG | Abschlußdatum der Recherche<br>17-03-1983 | Prüfer<br>BOEYKENS J.W. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | RESEARCH DISCLOSURE, Nr. 183, Juli 1979, Seiten 354,355, Nr. 18317, Havant, G.B. "Apparatus for controlling film movement in a photographic printer" * Seiten 354,355 * | 12 | |
| A | US-A-3 958 874 (J. UCHIDA)  * Spalte 2, Figur 2 * | 13-15, 18,19 | |

RECHERCHIERTE SACHGEBIETE (Int. Cl. 3)

Der vorliegende Recherchenbericht wurde für alle Patentansprüche erstellt

| Recherchenort DEN HAAG | Abschlußdatum der Recherche 17-03-1983 | Prüfer BOEYKENS J.W. |
|---|---|---|